# EUROPEAN PATENT APPLICATION

(11) **EP 3 603 451 A1**
(43) Date of publication of application: **05.02.2020**
(21) Application number: 19189188.6
(22) Date of filing: 30.07.2019
(51) Int. Cl.: A47B 91/12, F16B 7/20, F16M 11/04, F16B 9/02

(54) **A DISPLAY STAND COMPRISING A CONNECTOR FOR CONNECTING A FRAME TO A SUPPORTING FOOT**

(30) Priority: 30.07.2018 GB 201812403
(71) Applicant: Ultima Displays Limited, Corby, Northamptonshire NN17 4DU (GB)
(72) Inventor: RUEL, Jean-Blaise, 44470 Carquefou (FR)
(74) Representative: Abel & Imray

(57) **Abstract**

A display stand (80) comprising a frame (60) and a supporting foot (30) is described. The frame (60) is connected to the foot (80) via a connector (1) that comprises a female member (10) arranged to receive a corresponding male member (20) in a longitudinal direction. The connector (1) is a bayonet connector in which the male member (20) comprises a radially extending pin (21), and the female member comprises a groove (1 la-c) arranged to receive the pin (21) of the male member (20). The groove (1 la-c) has a profile shaped to initially receive the pin (21) in the longitudinal direction, and to subsequently accommodate relative rotation between the male member (20) and the female member (10), such that the connector (1) acts to connect the frame (60) to the foot (30) via a push and twist motion.

## Description

### Field of the Invention

The present invention concerns the field of display stands. More particularly, but not exclusively, this invention concerns a display stand comprising a connector for attaching a display stand frame to a supporting foot, and to a connector for use therein.

### Background of the Invention

Typical display stands may comprise a display sheet mounted to a display stand frame. The display stand frame is typically made from lightweight hollow tubing and assembled from base components such as straight pieces of tube, curved pieces of tube and supporting feet. Typically, the display stand frame is supported by the supporting feet, which allow the display stand frame to be freestanding. For the feet to support the display stand frame and allow it to be freestanding, the feet are usually required to be largely perpendicular to the display stand frame. The feet of the stand may be connected to the frame in various different ways (for example by a friction fit between the supporting feet and the tubing of the display stand frame).

It is desirable to be able to assemble and disassemble a display stand quickly and easily. For example, it tends to be desirable to be able to connect (and disconnect) the frame and the foot of the display stand quickly and easily.

In some display stands, connecting the feet to the frame can be difficult and/or time consuming. For example, there may be an unduly tight fit between the supporting feet and the display stand frame tube. In some arrangements, specific tools or locking pins may be required to form the connection.

Alternatively, or additionally, a problem can arise when the display stand is moved after it has been assembled (as is a typical requirement for display stands). If the display stand is dragged along a floor, the supporting feet may twist and no longer be arranged perpendicularly to the display stand frame, therefore providing no support to the display stand frame and requiring a user correction of the supporting feet. If the display stand is lifted, the supporting feet may separate from the display stand frame, which would require the user to re-fit the supporting feet.

The present invention seeks to mitigate at least one or more of the above-mentioned problems.

### Summary of the Invention

According to a first aspect, there is provided a display stand comprising a frame and a supporting foot, the frame being connected to the foot via a connector,
wherein the connector comprises a male member and a corresponding female member, the female member being arranged to receive the male member in a longitudinal direction,
characterised in that:
the connector is a bayonet connector in which the male member comprises a radially extending pin, and the female member comprises a groove arranged to receive the pin of the male member, the groove having a profile shaped to initially receive the pin in a longitudinal direction, and to subsequently accommodate relative rotation between the male member and the female member, such that the connector acts to connect the frame to the foot via a push and twist motion.

It will be understood by one skilled in the art that the term "longitudinal direction" refers to a linear direction in which the male and female member move to engage. Similarly, it will be understood that "radially extending" refers to a direction outwards from the male member and perpendicular to the "longitudinal direction". It will also be understood that the "relative rotation" between the male member and the female member occurs about a longitudinal axis of the male member (for example parallel to the "longitudinal direction").

In embodiments of the invention have recognised that a bayonet connector has been found to provide a means to quickly and easily assemble and disassemble a display stand. It may be that the display stand can be assembled without the need for any tools.

The profile of the groove may be shaped such that, when the stand and the foot are connected, the pin of the male member is retained at a distal end of the groove.

Embodiments of the invention in which the groove profile is shaped to retain the pin of the male member at a distal end of the groove can prevent the supporting foot inadvertently rotating relative to the display stand. This can keep the display stand stable, by preventing its supporting feet rotating to less stable angles, and can make an assembled display stand easier to move around.

The groove profile may comprise an inclined portion, rising to a peak, as the groove extends in the circumferential direction. The inclined portion may be followed by a declined portion descending in the longitudinal direction as the groove extends in the circumferential direction, whereby when the male member is fully received in the female member, the pin is located beyond the peak in the groove profile. Thus, the peak may act to retain the pin at the distal end of the groove.

It will be understood by one skilled in the art that the terms "rising" and "descending" refer to changes in height relative to the "longitudinal direction". Furthermore, it will be understood that the term "inclined" refers to movement in the direction of travel of the male member when moving to engage with the female member (and therefore, that the term "declined" refers to the opposite direction).

In embodiments of the invention, incorporating an inclined and declined portion into the groove profile as described can mean that the pin (and therefore the male member) must overcome gravity in order to move from the distal end of the groove. Retaining the pin at the distal end of the groove in such a manner can help to prevent the connector disengaging when the assembled display stand is lifted.

The groove profile may comprise a first, longitudinally extending, portion extending from the entrance of the female member to a first stop. The inclined portion of the groove profile may extend substantially perpendicular to the first portion. It may be that the longitudinally extending portion is of a length which is greater than 50%, and more preferably more than 60%, of the height of the male member.

The "first stop" may comprise the end of the "push" motion and the beginning of the "twist" motion.

In embodiments of the invention, incorporating a first longitudinal section and a second perpendicular section may enable the use of a two-stage movement to connect the male and female members. This two-stage movement can provide clear feedback, for example tactile feedback, between the two stages of a push and twist motion, which may make it easier for the user to connect and detach the supporting feet and display stand frame.

The display stand may further comprise a resiliently deformable stabilising ring, located at the interface between the frame and the foot. It may be that the stabilising ring, when deformed at the interface, exerts a biasing force on the female member, away from the male member, in a direction along the longitudinal direction. The stabilising ring may be a rubber O-ring.

In embodiments of the invention, incorporating a stabilising ring can reduce any wobble between the male and female members of the connector and thereby reduce wobbling of the display stand. In embodiments of the invention, the stabilising ring can also provide a biasing force which can help to retain the pin at the distal end of the groove.

It may be that the male member is attached to the supporting foot and the female member is attached to the display stand frame. It may be that the display stand frame comprises a tube, and the female member is located inside the tube. It may be that the male member is integral to the supporting foot. It may be that the female member is integral to the display stand frame.

The tube may have an outer diameter of 50mm or less. The tube may have an outer diameter of 40mm or less. The tube may have an outer diameter of 30mm or less. The tube may have an outer diameter of 20mm or more. The tube may have an outer diameter of 25mm or more. The tube may have an outer diameter of 30mm.

In embodiments of the invention, incorporating the connector into a tube of the above-mentioned dimensions has been found to be especially beneficial because smaller tubes tend to be more difficult to connect when tools are required.

The female member may further comprise a tongue which is arranged to be received into a corresponding groove of the tube, such that it prevents rotation of the female member within the tube. The tongue may extend in the longitudinal direction.

When attaching the female member to the male member, the twisting motion may urge the female member to rotate about its axis within the tube, which may make using the connector more difficult. Embodiments of the invention in which the female member incorporates a tongue received in a groove of the tube can inhibit, or more preferably prevent, the female member rotating within the tube.

The male member may comprise a finger which extends into a recess of the supporting foot. The finger and recess may create an interlock, such that it prevents rotation of the male member relative to the foot plate.

When attaching the female member to the male member, the twisting motion may urge the male member to rotate about its axis within the supporting foot, which may make using the connector more difficult. Embodiments of the invention in which the male member incorporates a finger extending into the supporting foot can inhibit or prevent the male member rotating about its axis within the supporting foot.

The male member may comprise a pair of radially extending pins (preferably diametrically opposite each other). The female member may comprise a corresponding pair of grooves.

According to a second aspect, there is provided a connector for use in a display stand according to the first aspect.

According to a third aspect, there is provided a kit of parts for a display stand frame, the kit of parts comprising a frame, a supporting foot and a connector according to the second aspect.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
Figure 1 shows a display stand according to a first embodiment of the invention;
Figure 2 shows the process of connecting the display stand frame to the supporting foot in the first embodiment of the invention;
Figure 3 shows a perspective view of a connector in the display stand of Figures 1 & 2;
Figure 4 shows a perspective view of the male member of the connector of Fig. 3;
Figure 5 shows a perspective view of the male member of the connector of Fig. 3;
Figure 6 shows a perspective view of a female member of the connector Fig. 3;
Figure 7 shows a perspective view of the female member of the connector of Fig. 3;
Figure 8 shows a perspective view of the female member of the connector of Fig. 3 with a stabilising ring;
Figure 9 shows a perspective view of the male member of Fig. 3 attached to a supporting foot;
Figure 10 shows a perspective view of a joining component; and
Figure 11 shows a perspective view of the display stand frame and the female member of the connector.

### Detailed Description

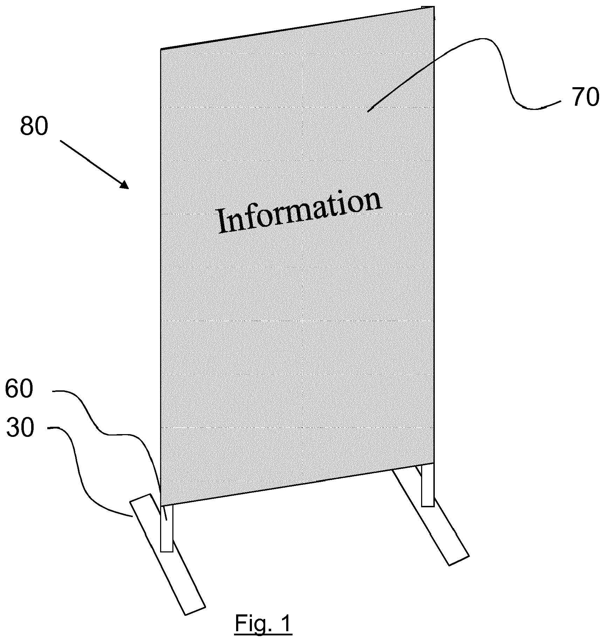

Fig. 1 shows a display stand 80 according to a first embodiment of the invention, comprising a display stand frame 60, two supporting feet 30 and a display sheet 70. The display stand 80 is supported by the two supporting feet 30 such that the display stand 80 is freestanding. There is a connector 1 (not shown, but discussed in more detail below) disposed between the supporting feet and the display stand frame 60. In the first embodiment of the invention, the display stand comprises a display sheet (for example as a roller display), but it will be appreciated that many other types of display stand are possible (for example with rigid signage and or utility surfaces for use in exhibitions and alike).

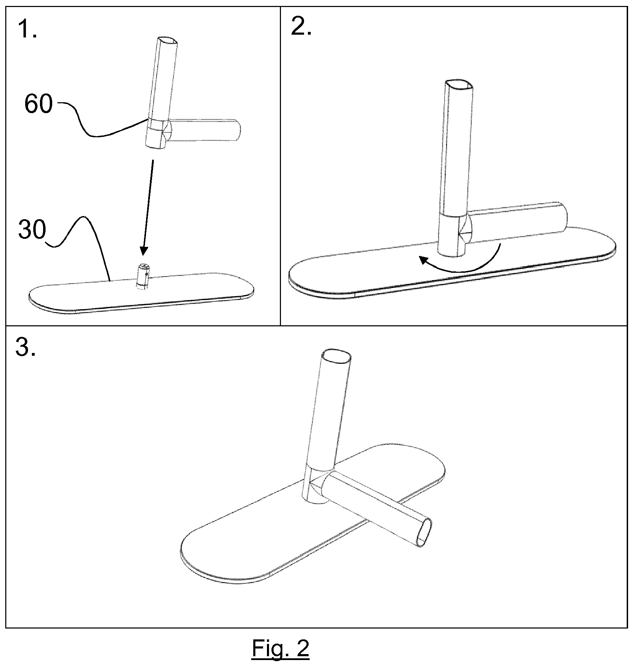

Fig. 2 shows the overall assembly process of connecting the display stand frame 60 to the supporting foot 30 according to a first embodiment of the invention. A display stand frame 60 is initially lowered onto the supporting foot 30, in a longitudinal direction (i.e. downwards) and with the supporting foot 30 in line with the display stand frame 60. A 90° twisting movement is then affected between the display stand frame 60 and the supporting foot 30, wherein the supporting feet 30 are thereafter securely arranged perpendicularly to the display stand frame 60. The connector 1, disposed between the display stand frame 60 and the supporting foot 30, guides the movement during the assembly process and secures the supporting foot 30 perpendicularly to the display stand frame 60, as will now be described in more detail below.

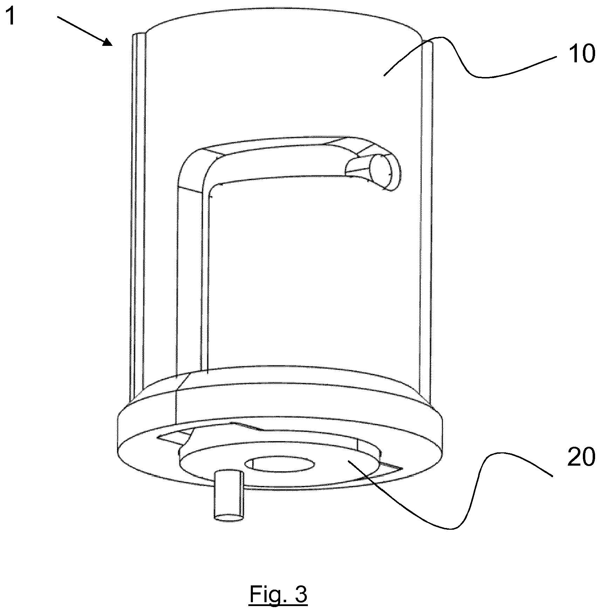

Fig. 3 shows the connector 1 according to the first embodiment of the invention. The connector 1 comprises a male member 20 and a female member 10.

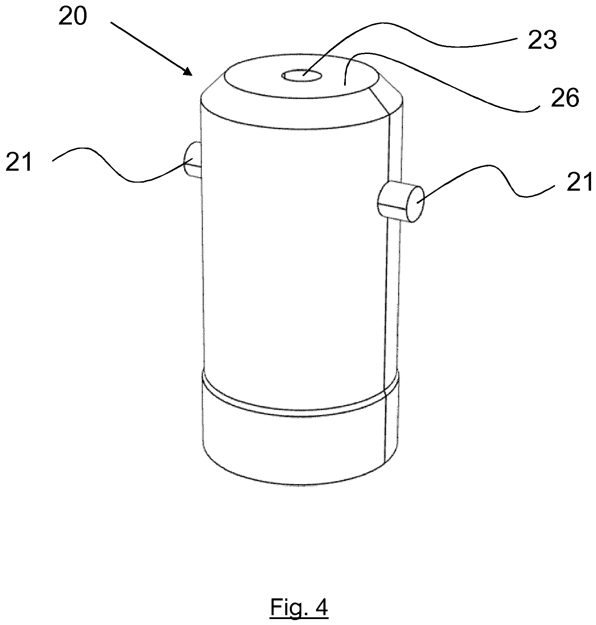

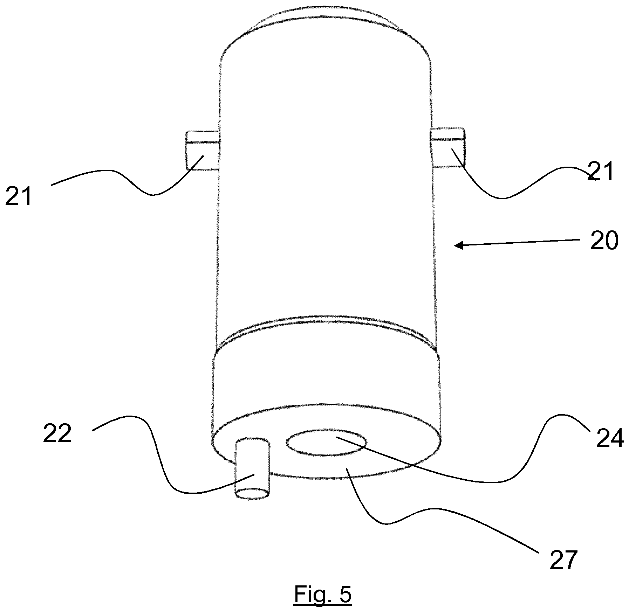

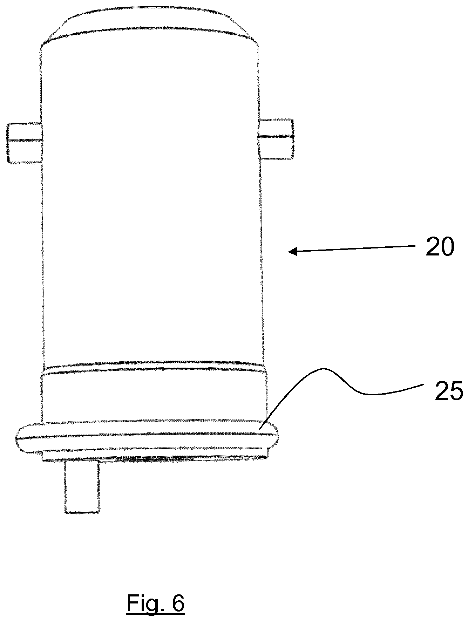

Figs. 4, 5 and 6 show the male member 20 of the connector 1 in isolation. The male member 20 is cylindrical in shape and comprises two radially extending pins 21. The radially extending pins 21 are cylindrical in shape and are of lower diameter than the male member 20. The male member 20 further comprises a bottom surface 27 and a finger 22. The finger 22 is a cylindrical protrusion which extends axially from an acentric position on the bottom surface 27 of the male member 20 (the function of the finger 22 will be described later). The male member 20 further comprises a top surface 26 and a hole 23 positioned on its top surface 26. The hole 23 located on the top surface of the male member 20 allows an insert to be used to hold the radially extending pins 21 in place.

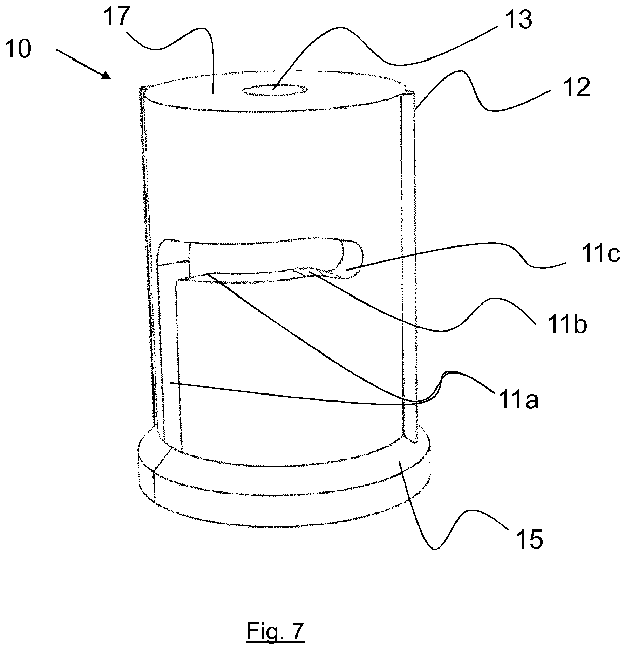

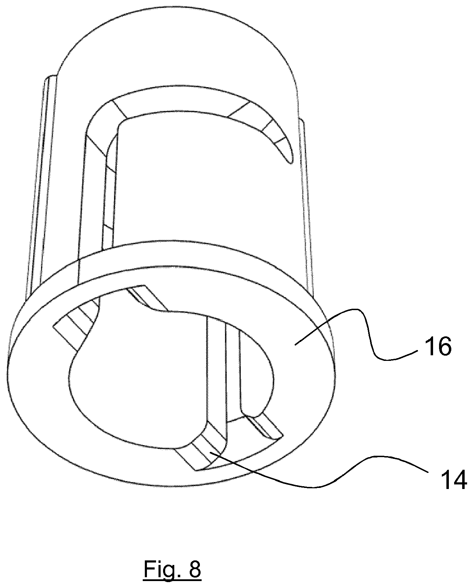

Figs. 7 and 8 show the female member 10 of the connector 1 in isolation. The female member 10 has a hollow cylindrical main body, and widens to a flared cylindrical base 16, through an interposed section with a chamfered edge 15. There is a cavity within the hollow female member 10 extending from an opening in the base 16. The cavity is wide enough to receive the male member 20, up to a top surface 17, which is enclosed, except for an attachment hole 13. The cylindrical main body comprises two grooves 11a-c, which extend from the cavity through the surface of the main body. On the base, at the start of the grooves 11a there is a profiled section 14. The cylindrical main body also comprises two alignment tongues 12, disposed on the main body outer surface and arranged along the length of the cylindrical body.

The male member 20 and the female member 10 are arranged such that the female member 10 receives the male member 20. The profiled sections 14 are used to guide the radially extending pins 21 into the start of the grooves 11a. The radially extending pins 21 of the male member 20 interact with the associated grooves 11a-c of the female member 10. To connect the male member 20 to the female member 10, a user presses the male member 20 into the female member 10 and applies a twisting motion as governed by the association between the grooves 11a-c and the radially extending pins 21 (see description with reference to Figure 2 above).

The grooves 11a-c are profiled such that the radially extending pins 21 reach a final position at the end of the grooves 11c when a directed twisting force is applied between the male member 20 and the female member 10. More specifically, there is an initial longitudinal section for accommodating the push movement, from which an inclined portion 11a extends approximately perpendicularly to accommodate the initial twist movement. The inclined portion 11a reaches a peak 11b, after which there is a short declined portion 11c ending at a distal end.

The radially extending pins 21 of the male member 20 occupy the position at the distal end of the grooves 11c. The shape of the groove profile, and specifically the presence of the peak 11b and declined portion 11c, prevents the pin moving back long the groove under the action of gravity (for example when the display stand 80 is lifted).

A rubber O-ring 25 also sits between the male member 20 and the female member 10 and at the interface between the frame and the foot. The O-ring biases the female member away from the male member such that the biasing force would need to be overcome to move the radially extending pins 21 back past the peak 11b in the groove profile, when the display stand 80 is standing upright. The O-ring also inhibits small-scale movement between the frame and the foot and therefore prevents rattling or other wobble within the display stand.

To disconnect the male member 20 and the female member 10, a compressive force is applied either directly while twisting the two members, or by twisting the two members with enough force that the interaction between the radially extending pins 21 and the end of the grooves 11b-11c provides the compressive force necessary to move the radially extending pins 21 to the middle positions of the grooves 11b. When the radially extending pins 21 travel back past the peak 11b of the grooves, only a twisting movement tends to be necessary. When the radially extending pins 21 reach the start of the grooves 11a, the male member 20 and the female member 10 of the connector may be pulled apart in the longitudinal direction.

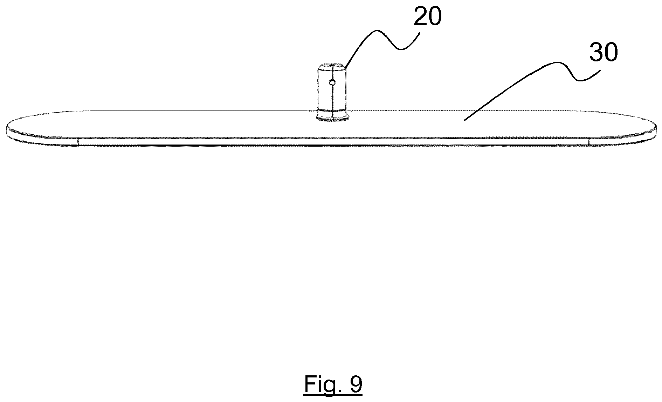

Fig. 9 shows the male member 20 attached to the supporting foot 30. The male member 20 is attached to the supporting foot 30 and secured by a securing means, such as a threaded screw (not shown). The finger 22 is also received within a recess (not shown) of the supporting foot 30, which prevents the male member 20 from rotating. Furthermore, the finger 22 being received within the recess ensures that the male member 20 is aligned correctly on the supporting foot, so that, when the stand is assembled, the supporting foot is perpendicular to the display stand 80. The finger 22 is arranged such that it protrudes from the bottom surface 27 of the male member 20 no further than the recess of the supporting foot 30.

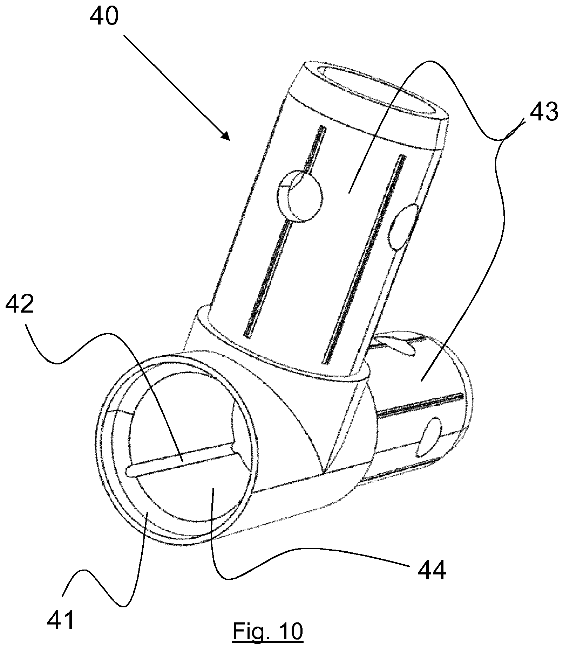

Fig. 10 shows a joining component 40, comprising a lip 41, a groove 42, two tube inserts 43, and a receiving space 44. The joining component 40 is a structural component of the display stand frame 60, which connects the tubes 50 to form the framework. In this embodiment, the joining component 40 also receives the female member 10 of the connector 1, which connects to the male member 20 of the connector, thereby detachably connecting the supporting foot 30 to the display stand frame 60.

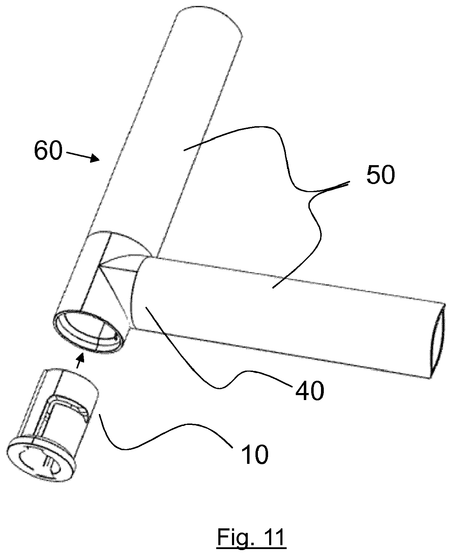

Fig. 11 shows the female member 10 and part of the display stand frame 60, comprising the joining component 40 and two tubes 50. The tube inserts 43 of the joining component 40 fit inside the tubes 50 and form part of the display stand frame 60. The joining component 40 is shaped to accommodate a tube 50 being connected perpendicularly to the receiving space 44. The receiving space 44 is predominantly a cylindrical cavity, arranged to receive the female member 10 of the connector 1. The receiving space 44 comprises the groove 42 arranged to receive the alignment tongues 12 of the female member 10 of the connector 1.

The lip 41 corresponds to the chamfered edge 15 of the female member 10, and the grooves 42 correspond to the alignment tongues 12 of the female member 10. The female member 10 is arranged to fit within the receiving space 44 of the joining component 40, so that the lip 41 is in contact with the chamfered edge 15 of the female member 10 and so that the grooves 42 receive the alignment tongues 12. The female member 10 is prevented from rotating within the joining component 40 by the alignment tongues 12 being received within the grooves 42. Furthermore, the alignment tongues 12 being received within the grooves 42 ensures that the female member 10 is in alignment such that the supporting feet 30, when attached to the male member 20, are perpendicular to the display stand frame 60.

The attachment hole 13 of the female member 10 is used to permit the female member 10 to be secured within the joining component 40 by the use of a screw or the like.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

In other embodiments of the invention (not shown) the radially extending pins 21 of the male member may be a shape other than a cylinder, and may instead be a triangular prism, cuboid, pentagonal prism, hexagonal prism or a prism of any number of faces. There may foreseeably be only one radially extending pin 21, arranged to interact with only one groove 11a-c.

In other embodiments of the invention (not shown) the tubes 50 may be a shape other than a cylinder, and may instead be a triangular prism, cuboid, pentagonal prism, hexagonal prism or a prism of any number of faces. The joining component 40, and the tube inserts 43, may either be of corresponding shape to these variations of shapes, or could be a different shape, for instance it could be cylindrical, or any of the other shapes described above.

In another embodiment of the invention, the male connector 20 may be integral to the supporting foot 30. The female member may also be integral to the tubes 50 or the joining component 40.

## Claims

1. A display stand comprising a frame and a supporting foot, the frame being connected to the foot via a connector,
wherein the connector comprises a male member and a corresponding female member, the female member being arranged to receive the male member in a longitudinal direction,
**characterised in that**:
the connector is a bayonet connector in which the male member comprises a radially extending pin, and the female member comprises a groove arranged to receive the pin of the male member, the groove having a profile shaped to initially receive the pin in the longitudinal direction, and to subsequently accommodate relative rotation between the male member and the female member, such that the connector acts to connect the frame to the foot via a push and twist motion.

2. A display stand according to claim 1, wherein the profile of the groove is shaped such that, when the stand and the foot are connected, the pin of the male member is retained at a distal end of the groove.

3. A display stand according to claim 2, wherein the profile of the groove comprises an inclined portion, rising to a peak, as the groove extends in the circumferential direction, followed by a declined portion descending in the longitudinal direction as the groove extends in the circumferential direction, whereby when the male member is fully received in the female member, the pin is located beyond the peak in the groove profile.

4. A display stand according to any preceding claim, wherein the profile of the groove comprises a first, longitudinally extending, portion extending from the entrance of the female member to a first stop.

5. A display stand according to claim 4 when dependent on claim 3, wherein the inclined portion extends substantially perpendicularly to the first portion.

6. A display stand according to any preceding claim, further comprising a resiliently deformable stabilising ring, located at the interface between the frame and the foot.

7. A display stand according to claim 6, wherein the stabilising ring, when deformed at the interface, exerts a biasing force on the female member, away from the male member, in a direction along the longitudinal direction.

8. A display stand according to claims 6 or 7, wherein the stabilising ring is a rubber O-ring.

9. A display stand according to any preceding claim, wherein the male member is attached to the supporting foot and the female member is attached to the display stand frame.

10. A display stand according to claim 9, wherein the display stand frame comprises a tube, and the female member is located inside the tube.

11. A display stand according to claim 10, wherein the tube has an outer diameter of less than 50mm.

12. A display stand according to claims 10 or 11, wherein the female member further comprises a tongue which is arranged to be received into a corresponding groove of the tube, such that it prevents rotation of the female member within the tube.

13. A display stand according to any of claims 9 to 12, wherein the male member further comprises a finger which is arranged to extend into a recess of the supporting foot such that it prevents rotation of the male member relative to the supporting foot.

14. A connector for use in the display stand according to any preceding claim.

15. A kit of parts for a display stand, the kit of parts comprising a frame, a supporting foot and the connector of claim 14.
